# EUROPEAN PATENT APPLICATION

(11) **EP 4 811 333 A1**
(43) Date of publication of application: **23.09.2026**
(21) Application number: 26160705.5
(22) Date of filing: 25.02.2026
(51) Int. Cl.: G09B 23/28

(54) **INFANT CARE DEVICE WITH BUILT-IN TRAINING**

(30) Priority: 18.03.2025 US 202519082393
(71) Applicant: GE Precision Healthcare LLC, Waukesha, WI 53188 (US)
(72) Inventor: FICHTNER, Robert, Waukesha, 53188 (US); BECKER, Karen P., Waukesha, 53188 (US)
(74) Representative: Kilburn & Strode LLP

(57) **Abstract**

A system for training on infant care devices includes a processor and a memory. The memory includes instructions executable by the processor to receive a request for training on an infant care device, determine a training selection based on the request, and provide a training based on the training selection, a software application running on the infant care device, and a current user interface being provided by the software application.

## Description

### BACKGROUND

The present disclosure generally relates to infant care devices, and more specifically to infant care devices with built-in training.

Infant care devices may be useful for neonates and prematurely born infants who are not physiologically developed enough to be able to survive without medical attention. A frequently used medical support device for such infants is the incubator. The incubator provides an environment that maintains the neonate at a specific metabolic state, thereby permitting a more physiologically stable environment for growth and development. For example, neonatal incubators create a microenvironment that supports the neonates' thermal needs by providing an environment with a desired temperature based on the infants' individual characteristics. Further, these incubators typically include a humidifier and associated control system that controls the humidity and temperature in the neonatal microenvironment. The humidifier includes a device that evaporates an evaporant, such as distilled water, to increase relative humidity of air within the neonatal microenvironment. The humidifier may control the humidity to a specific percentage by adjusting the amount of water vapor that the humidifier adds to the microenvironment. The heater may be, for example, an air heater controlled to maintain the microenvironment area to a specific temperature. In some scenarios, radiant warmers may be used, instead of incubators, for neonates where faster direct (radiant) heat can be controlled. In still other embodiments, hybrid incubator/radiant combination warming systems may be used, various embodiments of which are well known in the art.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

A system for training on infant care devices includes a processor and a memory. The memory includes instructions executable by the processor to receive a request for training on an infant care device, determine a training selection based on the request, and provide a training based on the training selection, a software application running on the infant care device, and a current user interface being provided by the software application.

In some embodiments, the instructions are executable by the processor to provide a training guide for a selected function of the software application.

In some embodiments, the instructions are executable by the processor to provide a clinical simulation for the software application.

In some embodiments, the system includes an infant mannequin configured to provide simulated physiological data corresponding to the clinical simulation.

In some embodiments, the instructions are executable by the processor to perform a screen recording of the user interfaces that are provided by the software application.

In some embodiments, the instructions are executable by the processor to perform a playback of the screen recording.

In some embodiments, the instructions are executable by the processor to perform a video recording of a clinical setting comprising the infant care device.

In some embodiments, the instructions are executable by the processor to perform a playback of the video recording.

In some embodiments, in response to a trainee completing the training, the instructions are executable by the processor to generate a training history for the trainee based on the training and the infant care device.

In some embodiments, the instructions are executable by the processor to identify a training requirement for the trainee to complete a training module associated with the infant care device.

A method for training on infant care devices includes receiving a request for training on an infant care device. Additionally, the method includes determining a training selection based on the request. Further, the method includes providing a training based on the training selection, a software application running on the infant care device, and a current user interface being provided by the software application.

In some embodiments, the method includes providing a training guide for a selected function of the software application.

In some embodiments, the method includes providing a clinical simulation for the software application.

In some embodiments, the clinical simulation is associated with an infant mannequin configured to provide simulated physiological data corresponding to the clinical simulation.

In some embodiments, the method includes performing a screen recording of the user interfaces that are provided by the software application.

In some embodiments, the method includes performing a playback of the screen recording.

In some embodiments, the method includes performing a video recording of a clinical setting comprising the infant care device.

In some embodiments, the method includes performing a playback of the video recording.

A computer-readable medium includes instructions executable by a processor to receive a request for training on an infant care device, determine a training selection based on the request, and provide a training based on the training selection, a software application running on the infant care device, and a current user interface being provided by the software application.

In some embodiments, the instructions are executable by the processor to provide a training guide for a selected function of the software application and provide a clinical simulation for the software application.

Various other features, objects, and advantages of the invention will be made apparent from the following description taken together with the drawings.

### BRIEF DESCRIPTION OF THE DRAWINGS

The drawings illustrate the best mode presently contemplated of carrying out the disclosure. In the drawings:
Fig. 1 is a perspective view of an exemplary infant care device with patient safety monitoring according to some embodiments of the present disclosure.
Fig. 2 is a perspective view of an exemplary infant care device with patient safety monitoring according to some embodiments of the present disclosure.
Fig. 3A is an example user interface for training on an infant care device, according to some embodiments of the present disclosure.
Fig. 3B is an example user interface for training on an infant care device, according to some embodiments of the present disclosure.
Fig. 3C is an example user interface for training on an infant care device, according to some embodiments of the present disclosure.
Fig. 3D is an example user interface for training on an infant care device, according to some embodiments of the present disclosure.
Fig. 3E is an example user interface for training on the infant care device, according to some embodiments of the present disclosure.
Fig. 4A is an example user interface for training on an infant care device, according to some embodiments of the present disclosure.
Fig. 4B is an example user interface for training on an infant care device, according to some embodiments of the present disclosure.
Fig. 4C is an example user interface for training on an infant care device, according to some embodiments of the present disclosure.
Fig. 4D is an example user interface for training on an infant care device, according to some embodiments of the present disclosure.
Fig. 4E is an example user interface for training on an infant care device, according to some embodiments of the present disclosure.
Fig. 4F is an example user interface for training on an infant care device, according to some embodiments of the present disclosure.
Fig. 5 is an infant mannequin and an example user interface for training on an infant care device, according to some embodiments of the present disclosure.
Fig. 6 is an infant care device and an example user interface for training on the infant care device, according to some embodiments of the present disclosure.
Fig. 7 is a diagram of a system for training on infant care devices, according to some embodiments of the present disclosure.
Fig. 8 is a process flow chart of a method for training on infant care devices, according to some embodiments of the present disclosure.
Fig. 9 is an exemplary training manager for infant care devices, according to some embodiments of the present disclosure.

### DETAILED DESCRIPTION

In the present description, certain terms have been used for brevity, clarity and understanding. No unnecessary limitations are to be inferred therefrom beyond the requirement of the prior art because such terms are used for descriptive purposes only and are intended to be broadly construed.

As used herein, unless otherwise limited or defined, discussion of particular directions is provided by example only, with regard to particular embodiments or relevant illustrations. For example, discussion of "top," "bottom," "front," "rear," "left," "right," "horizontal," "vertical," and "longitudinal" features and/or relative motion, e.g., movement "up" and "down," is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, or alternatively, embodiments may be arranged in a different orientation such that "top" and "bottom" features are arranged horizontally relative to each other, for example in a "left-to-right" orientation.

The use herein of the terms "including," "comprising," or "having," and variations thereof, is meant to encompass the elements listed thereafter and equivalents thereof, as well as additional elements. Embodiments recited as "including," "comprising," or "having" certain elements are also contemplated as "consisting essentially of" and "consisting of" those certain elements.

The inventors have recognized a problem with current infant care devices-such as incubators, radiant warmers, and other types of neonatal care stations and devices, which is that training on infant care devices may at times be insufficient. For example, when a health care facility purchases new infant care devices, they may also purchase training from the infant care device vendor. Accordingly, the vendor may send one or more training personnel on-site to the health care facility, who may provide training to available staff. However, all staff that may use the device may not be available for the training. For example, some staff may be on vacation, or may not be available because of their job responsibilities. Further, the purchase of infant care devices may represent a relatively large financial expense. As such, health care facilities may use these devices for relatively long periods of time. Over such long periods, new staff with the responsibility to operate the infant care devices may lack the training to use these devices. In some cases, the health care facility may provide training using staff with expertise in operating the devices. However, such training may take the health care staff away from their responsibilities in caring for patients. Further, using staff with expertise, instead of the professional trainers a vendor may provide, may result in the trained staff not receiving training on a wide variety of functions that the devices may provide. Rather, staff with expertise in providing training may merely train new staff in a limited set of functionality with which they may be familiar. In these ways, health care professionals may receive inadequate training on the operation of infant care devices, which may have a negative effect on patient outcomes.

Through significant research and experimentation, the inventors developed the disclosed built-in training for infant care devices, which provides improved patient outcomes by providing training on the infant care device on demand. In this way, health care professionals may learn how to use infant care devices on the device itself, and also in the context of providing care. Additionally, such training may include a wider range of infant care device functionality than may be provided with traditional training methods. Further, health care professionals may learn on the job, instead of taking time away from their work responsibilities to attend training sessions.

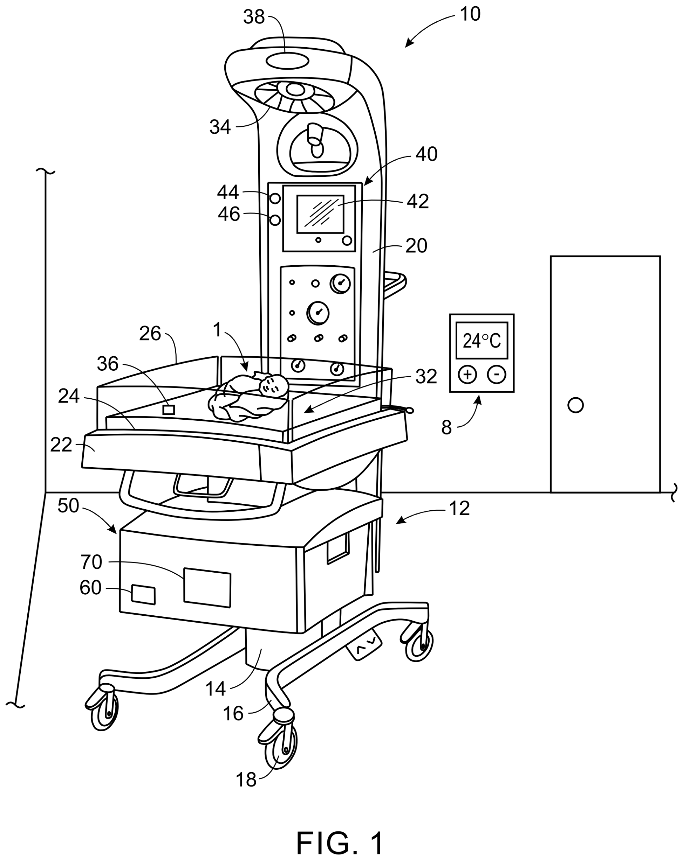

Fig. 1 is a perspective view of an exemplary infant care device 10 with patient safety monitoring according to some embodiments of the present disclosure. The infant care device 10 is shown within a room, such as a labor and delivery suite, or a neonatal intensive care unit, within a medical facility. The ambient air temperature within the room is controlled by room thermostat 8, which is adjustable up and down according to the specification of the patient and medical personnel in a customary manner.

The infant care device 10 may define an infant warmer including a stand 12 supported by legs 14 and feet 16 provided with wheels 18 in a manner presently known in the art. A column 20 extends upwardly from the stand 12 and supports a platform 22. The platform 22 may be height adjustable along the column 20 in a manner presently known in the art. Further, the platform 22 is configured to support a bed 24 (here, a mattress), which is configured to support the patient 1. The walls 26 generally surround and cover the bed 24, to prevent the patient 1 from falling from the bed 24 and also to maintain a controlled environment within the interior. Additionally, the walls 26 may be movable to latch to and unlatch from, each other, thereby providing access to the patient 1. Thus, by latching the movable walls 26 into a secured position, the infant care device 10 can provide a safe, stable, and confined space that may prevent the patient 1 from falling from the bed 24. In some cases, the platform 22 may provide a frame to which the walls 26 and/or cover may latch.

The air within the interior defined by the walls 26 (and when present, the canopy) is also referred to as inside air 32. The temperature of the inside air 32 is controlled at least in part by the operation of a heater (not shown). The heater may be a heat generating device such as those used within the exemplary warmers described above. It should be recognized that when no canopy is present, the inside air 32 interior is more able to mix with the ambient air within the room. With continued reference to Fig. 1, an enclosure 50 is also supported by the stand 12, and contains a controller 70 for operating the infant care device 10 in a manner presently known in the art. Additionally, according to some embodiments of the present disclosure, the controller 70 includes a training manager for the infant care device 10.

The infant care device 10 further includes an example user interface 40, which may include a display 42 configured to provide warning indications (text, colors, icons, and the like) as well as messages relating to operation of the infant care device 10. Additionally, the user interface 40 may include a speaker 44, one or more lights 46, and display 42. The speaker 44 and lights 46 may provide further information regarding the operational status of the infant care device 10 and/or communicate information to an operator via sounds, spoken text, spoken words, flashing, varying colors, and/or the lights being on or off. In this manner, as is discussed further below, the user interface 40 provides feedback customary of infant care systems 10 presently known in the art, but also additional information, warnings, and/or the like according to the present disclosure. It should be recognized that the user interface 40 may also or alternatively be provided via an external device (e.g., a mobile device such as a tablet or smart phone) in communication with the infant care system 10. For example, a smart phone may serve as the display 42, speaker 44, and/or lights 46 (alone or in conjunction with another display 42, speaker 44, and lights 46, on the infant care device 10) that communicates with the infant care device 10 via Bluetooth^{®} or another wireless protocol known in the art. Further, according to some embodiments of the present disclosure, the controller 70 may use the display 42, speaker 44, and lights 46, to provide built-in training for the infant care device 10. For example, the controller 70 may include a training manager for the infant care device 10 that provides visual and audio tutorials that demonstrate how to use the infant care device 10. The tutorials may include guided prompts for specific functions of the infant care device 10. Additionally, the tutorials may include clinical simulations where the controller 70 device can simulate patient feedback, such as physiological measures, on the display 42, and provide simulated responses to inputs that a clinician or other operator may provide to the infant care device 10. Further, the simulations may include the use of electronically controlled patient mannequins. Such simulations may be useful for training health care professionals in techniques such as intubation, resuscitation, and the like. Additionally, these training scenarios may provide embedded links that the clinician or other operator may use to access further training. In these ways, some embodiments of the present disclosure may provide training for using the infant care device 10 on the infant care device 10 itself. Further, such training may include the available features and functionality of the infant care device 10, thereby expanding training over conventional methods, and thus, improving patient care and patient outcomes. Additionally, according to some embodiments of the present disclosure, the controller 70 may document the training of clinicians or other operators of the infant care device 10, thus providing a streamlined documentation process to help ensure that health care professionals that are responsible for using the infant care device 10 for patient care meet their training requirements.

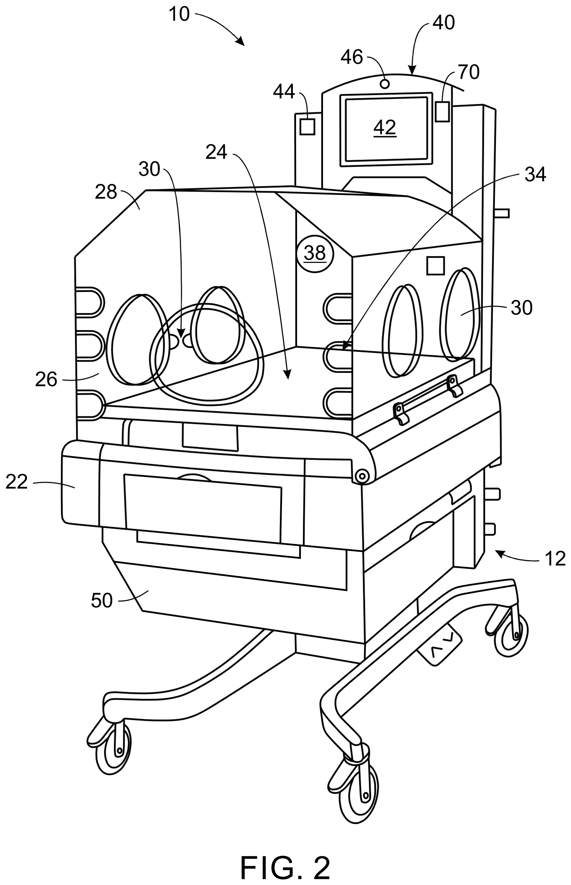

Fig. 2 is a perspective view of an exemplary infant care device 10 with patient safety monitoring according to some embodiments of the present disclosure. In this example, the infant care device 10 is similar to that of Fig. 1, but now as an incubator rather than an infant warmer. Similar to Fig. 1, the infant care device 10 of Fig. 2 includes stand 12, platform 22, bed 24, walls 26, openings 34, image sensor 38, user interface 40, enclosure 50, and controller 70. The openings 34 may be pass-through openings for passing cables, tubes, and the like into the incubator. Additionally, the infant care device 10 of Fig. 2 includes a canopy 28, whereby the interior of the infant care device 10 is defined by the walls 26 and the canopy 28. Further, the incubator of Fig. 2 includes portholes 30 within the walls 26 and/or canopy 28 to provide access to the interior (e.g., patient 1, bed 24, and/or the platform 22) without opening one or more of the walls 26 and/or the canopy 28 in a manner presently known in the art.

The canopy 28 can be elevated from, and lowered onto the four walls 26. Further, the configuration of the walls 26 and cover may vary in different embodiments of the present disclosure. For example, the infant care device 10 may have four walls 26, with a canopy 28 that is positioned atop the four walls. Alternatively, the canopy 28 may include a piece that extends into the spaces occupied by one or more of the walls 26 in Fig. 1. In such an embodiment, the infant care device 10 may include two or three walls 26, with the extended cover providing the wall structure in the spaces unoccupied by the canopy 28. Further, the walls 26 may be fixed to each other, the canopy 28, and/or the platform 22.

The controller 70 of Fig. 2 may be similar to the controller 70 of Fig. 1. As such, the controller 70 may include a training manager that provides tutorials demonstrating the use of the infant care device 10. The tutorials may include guided prompts for the available functions of the infant care device 10, clinical simulations with simulated physiological measures of a patient, and simulated responses to operator inputs As stated previously, the simulations may also incorporate the use of electronically controlled patient mannequins for training health care professionals in techniques such as intubation, resuscitation, and the like. Additionally, the training manager may provide embedded links that the clinician or other operator may use to access further training. In these ways, some embodiments of the present disclosure may provide training for using the infant care device 10 on the infant care device 10 itself. Further, such training may expand training over conventional methods, and thus, improve patient care and patient outcomes. Additionally, according to some embodiments of the present disclosure, the training manager may document the training of health care professionals responsible for operating the infant care device 10, thus providing a streamlined documentation process to help ensure that health care professionals meet their training requirements for operating the infant care device 10.

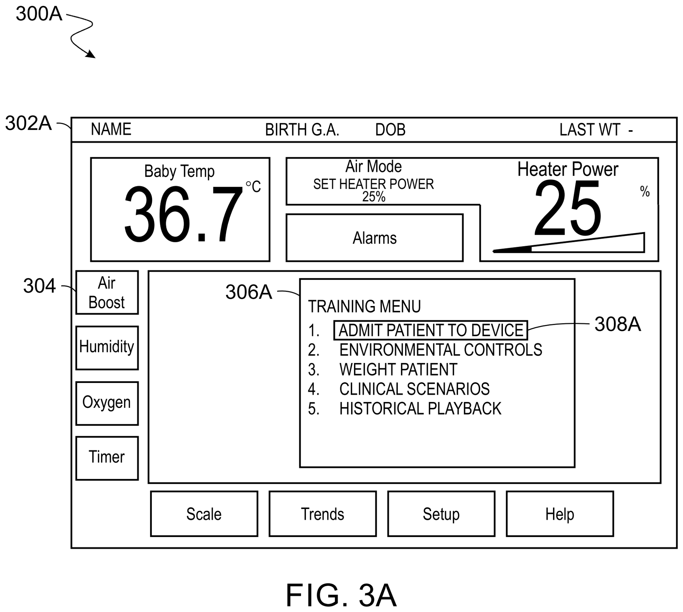

Fig. 3A is an example user interface 300A for training on the infant care device 10, according to some embodiments of the present disclosure. The example user interface 300A may represent a touch screen interface for operating an infant warmer device. As shown, the example user interface 300A includes header fields 302A for the "Name," "Birth G.A." (Gestational Age), "DOB" (Date of Birth), "Last Wt." (Weight), the patient temperature, "Baby Temp 35.6° C," and the heater power, "25%." Additionally, the user interface 300A includes selection buttons 304 for operating the infant care device 10, including, "Air Boost," "Humidity," "Oxygen," "Timer," "Scale," "Trends," "Setup," and "Help." Further, the example user interface 300A includes a training dialog box 306A, with a "Training Menu" of five training options: "Admit Patient to Device," "Environmental Controls," Weigh Patient," "Clinical Scenarios," and "Historical Playback." In this example, the header fields 302A may indicate that the patient is not yet admitted to the device. Accordingly, a selection box 308A indicates that the, "Admit Patient to Device," training option is selected.

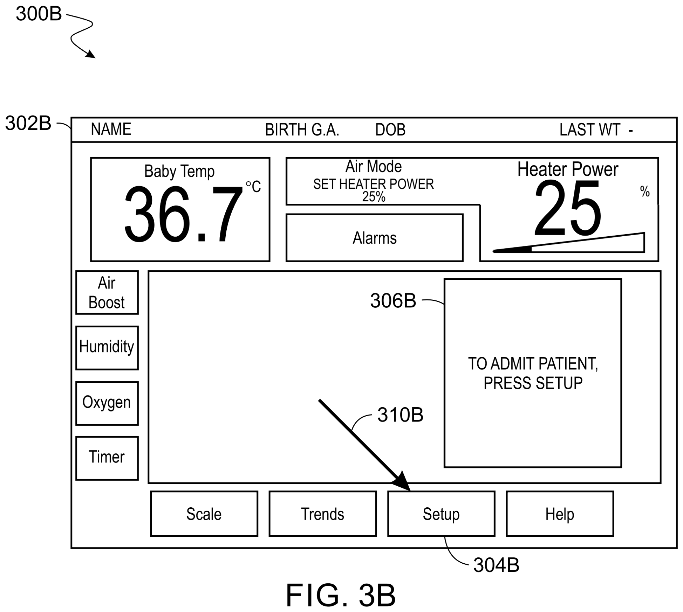

Fig. 3B is an example user interface 300B for training on the infant care device 10, according to some embodiments of the present disclosure. The example user interface 300B may be similar to the example user interface 300A. Further, the example user interface 300B may represent the training manager's response to the selection of the Admit Patient to Device training option indicated on the example user interface 300A. In this example, the training dialog 306B includes a training instruction, "To admit patient, press Setup." Additionally, the example user interface 306B includes a guiding arrow 310 indicating the location of the Setup button 304B. Accordingly, the clinician or other operator may select the Setup button 304B with a touch to the touch screen interface, mouse selection, keyboard selection, and the like.

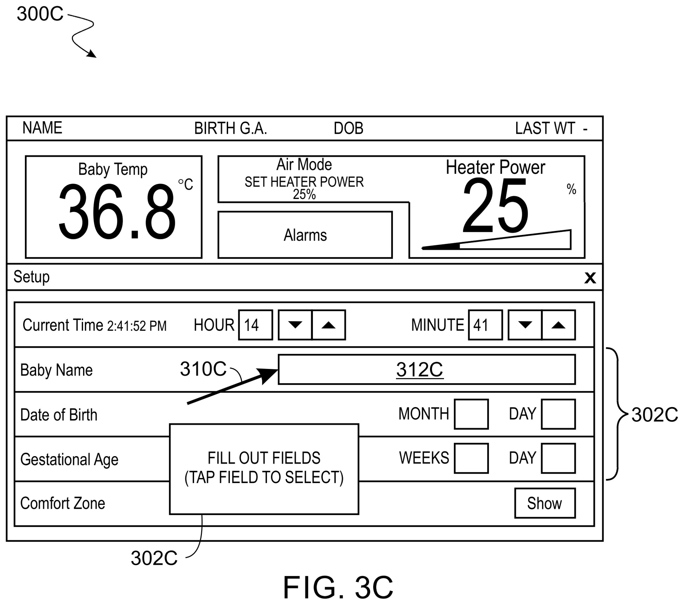

Fig. 3C is an example user interface 300C for training on the infant care device 10, according to some embodiments of the present disclosure. The example user interface 300C may be similar to the example user interface 300B. Further, the example user interface 300C may represent the training manager's response to the selection of the Setup button 304B indicated on the example user interface 300B. In this example, the example user interface 300C includes fields 302C. "Baby Name," "Date of Birth," and "Gestational Age." Further, the example user interface 300C includes a training dialog box 306C, which provides an instruction, "Fill out fields (Tap Field to Select)." Additionally, the example user interface 300C includes a guiding arrow 310C, indicating the "Baby Name," field.

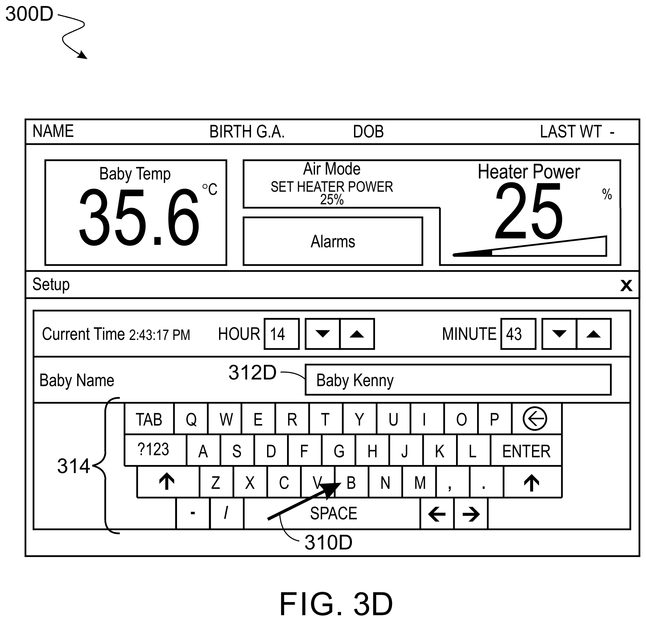

Fig. 3D is an example user interface 300D for training on the infant care device 10, according to some embodiments of the present disclosure. The example user interface 300D may be similar to the example user interface 300C. Further, the example user interface 300D may represent the training manager's response to the selection of the "Baby Name" field 312C indicated on the example user interface 300C and a user input to the "Baby Name" field 312D. More specifically, the example user interface 300D includes a guiding arrow 410D pointing to an on-screen keyboard 314 for filling out the "Baby Name" field 312D. As indicated, the clinician or other operator has entered the name, "Baby Kenny."

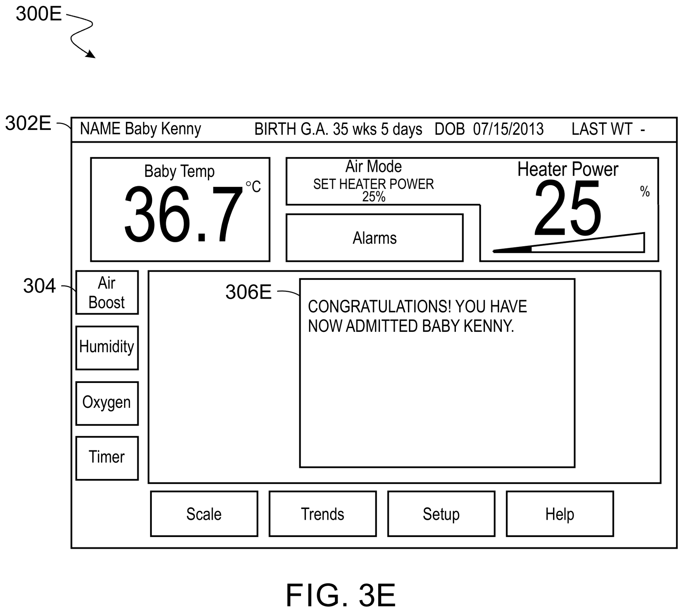

Fig. 3E is an example user interface 300E for training on the infant care device 10, according to some embodiments of the present disclosure. The example user interface 300E may be similar to the example user interface 300A. Further, the example user interface 300E may represent the training manager's response to the data entry by the clinician or other operator into the fields 302C, such as the entry of the "Baby Name" field 312D as indicated in the example user interface 300D. In this example, the header fields 302E indicate the values entered: "Name Baby Kenny," "Birth G.A. 35 wks (weeks) 5 days," "DOB 07/15/2013." Additionally, the example user interface 300E includes a training dialog 306E with the message, "Congratulations! You have now admitted Baby Kenny," thus indicating that the admission function, and the training for the admission function has completed successfully.

Further, some embodiments of the present disclosure may include a training administration system that tracks when and whether clinical staff have completed training on an infant care device 10. Additionally, such embodiments may provide reminders to clinical staff that have not completed their training. Accordingly, clinical managers and educators can use the training administration system to identify clinical staff that have and have not completed training on specific infant care devices.

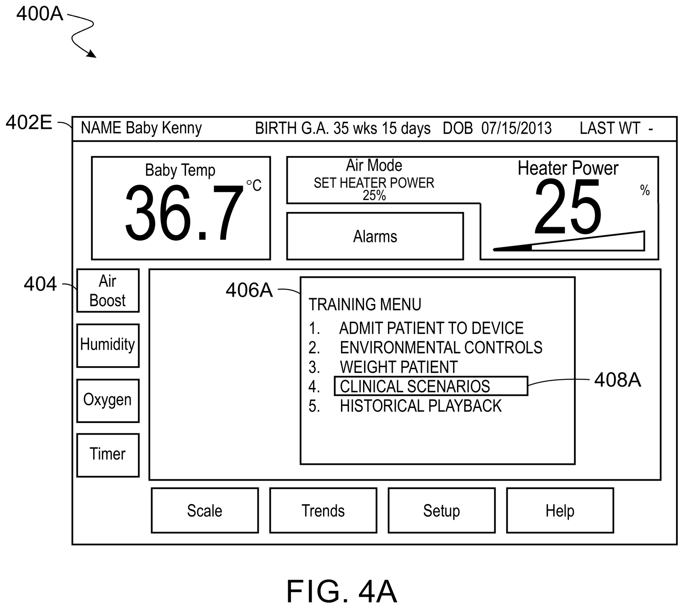

Fig. 4A is an example user interface 400A for training on the infant care device 10, according to some embodiments of the present disclosure. The example user interface 400A may be similar to the example user interface 300A. As such, the example user interface includes header fields 402A, patient temperature, heater power percentage, selection buttons 304, and training dialog box 406A. In this example, a selection box 408A indicates that the "Clinical Scenarios," training option is selected.

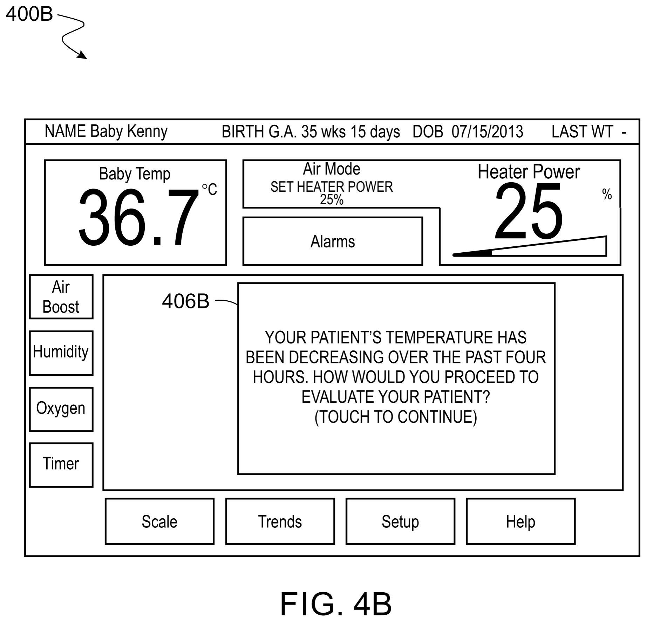

Fig. 4B is an example user interface 400B for training on the infant care device 10, according to some embodiments of the present disclosure. The example user interface 400B may be similar to the example user interface 400A. Further, the example user interface 300B may represent the training manager's response to the selection of the Clinical Scenarios training option indicated on the example user interface 400A. In this example, the training dialog 406B the description of an example clinical scenario, "Your patient's temperature has been decreasing over the past four hours. How would you proceed to evaluate your patient?" Additionally, the training dialog 406B includes an instruction, "(Touch to continue)." According to some embodiments of the present disclosure, the training manager may select clinical scenarios randomly from a database of potential clinical scenarios. Alternatively, in response to the selection of the Clinical Scenarios training option indicated in the example user interface 400A, the training manager may provide a training dialog (not shown) indicating multiple clinical scenarios for selection and simulation.

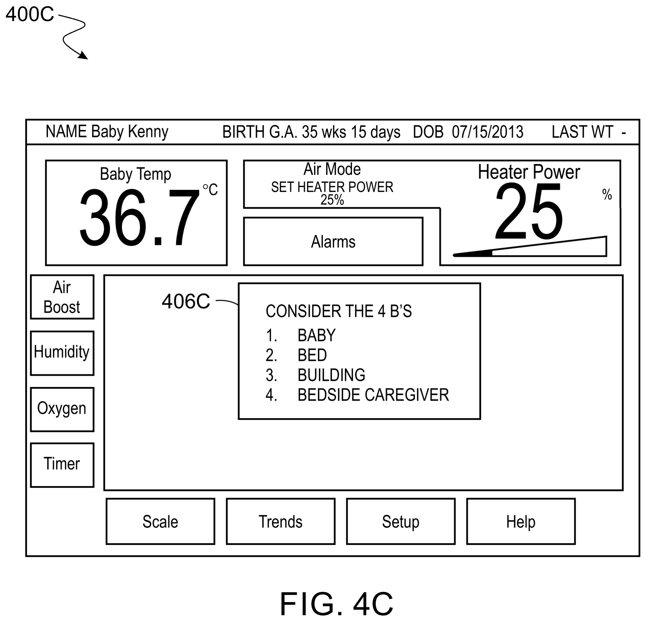

Fig. 4C is an example user interface 400C for training on the infant care device 10, according to some embodiments of the present disclosure. The example user interface 400C may be similar to the example user interface 400B, and may represent the training manager's response to the touch input indicated in the example user interface 400B. In this example, the training dialog 406C includes training guidance, "Consider the 4 B's 1. Baby, 2. Bed, 3. Building, 4. Bedside Caregiver." This guidance may be relevant to the clinical scenario indicated in the example user interface 400B, where the baby's temperature is dropping over the past four hours. Alternatively, each item of training guidance may be selectable. Thus, upon selection, the training manager may display another training dialog having a description of the selected item, and the relevance of the selected item to temperature management. Additionally, this training dialog may include selectable "Next" and/or "Back," buttons that the clinician or other operator may select to step forward (or backward) through descriptions of the selectable items.

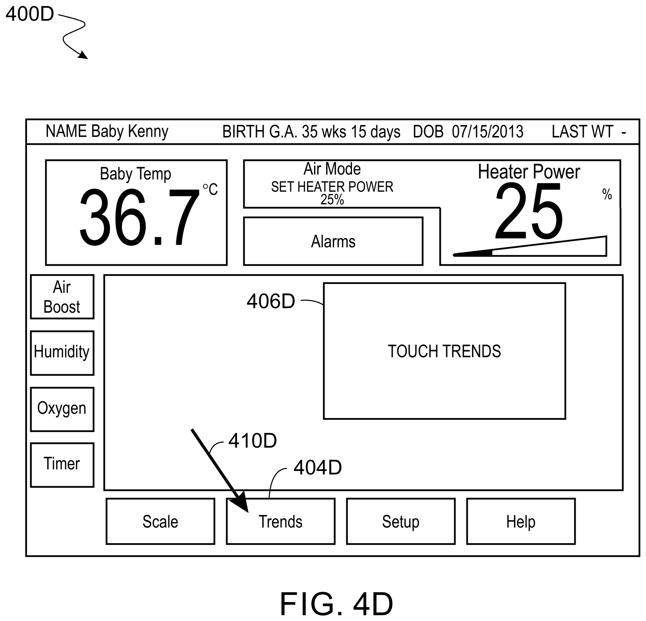

Fig. 4D is an example user interface 400D for training on the infant care device 10, according to some embodiments of the present disclosure. The example user interface 400D may be similar to the example user interface 400C. Additionally, the example user interface 400D may represent the training manager's response to a user selection on the example user interface 400C to proceed to the next stage of the clinical scenario. Alternatively, the training manager may provide the example user interface 400D after the countdown of a predetermined timer that allows the clinician or other operator time to read and consider the training guidance in the training dialog 406C. In this example, the training dialog 406 includes an instruction, "Touch Trends." Additionally, the example user interface includes a guiding arrow 410D pointing to the "Trends" button 404D.

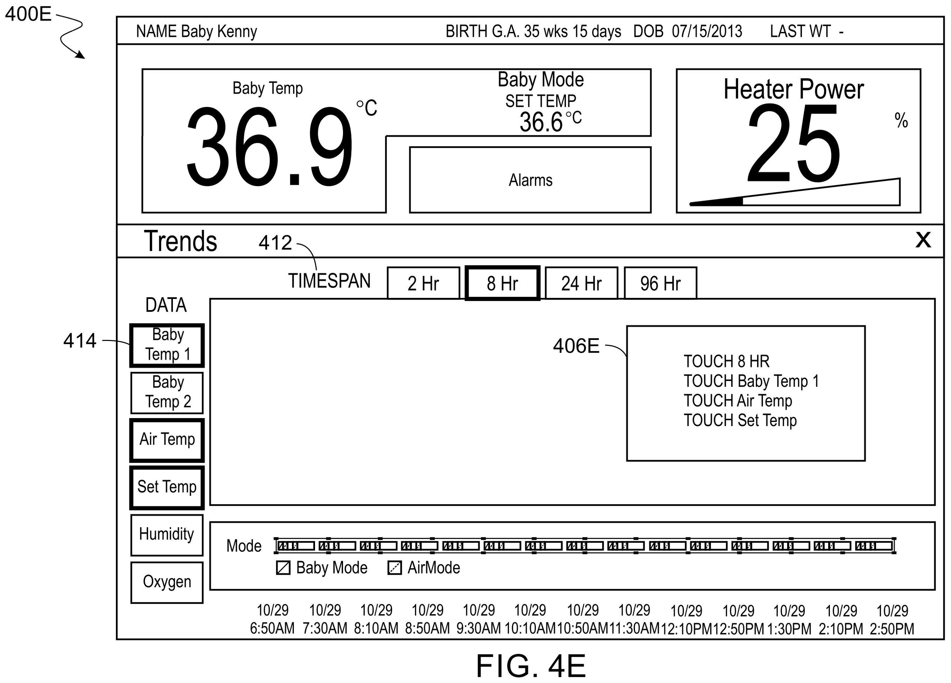

Fig. 4E is an example user interface 400E for training on the infant care device 10, according to some embodiments of the present disclosure. The example user interface 400E is similar to the example user interface 400D. Additionally, the example user interface 400E may represent the training manager's response to the selection of the Trends button 404D as indicated in the user interface 400D. Additionally, the example user interface 400E includes "Timespan" selections 412 (2, 8, 24, and 96 Hours), and sensor measurement selections 414 (Baby Temp 1, Baby Temp 2, Air Temp, Set Temp, Humidity, and Oxygen). Further, the example user interface 400E includes a training dialog 406E, which provides training instructions, "Touch 8 Hr" (Timespan), "Touch Baby Temp 1," (sensor selection), "Touch Air Temp," and "Touch Set Temp." The Baby Temp 1 may represent the first "B," the baby, indicating the temperature of the patient as measured by a sensor such as, an electrode attached to the patient's chest. Additionally, the Air Temp may represent the second and third "B's," indicating the ambient temperature of the room air or the air in the area approximating the bed 24 of the infant care device 10. Further, the Set Temp may represent the fourth "B," indicate the temperature at which the bedside caregiver is setting the radiant warmer of the infant care device. Further, the user interface 400E includes highlights surrounding the instructed selections. Alternatively, the user interface 400E may include guiding arrows (not shown) to the instructed selections.

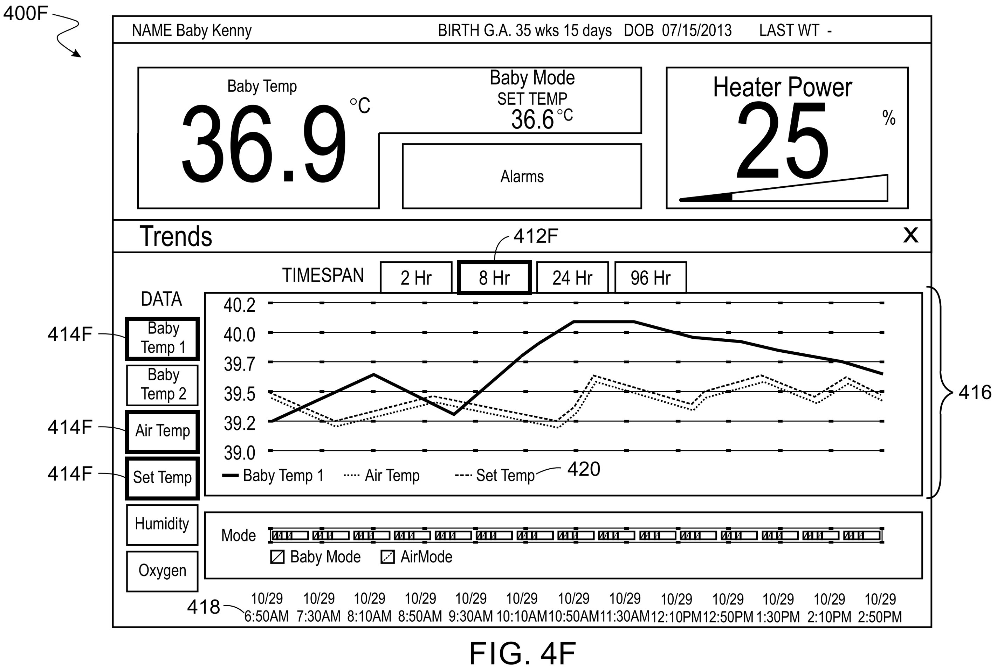

Fig. 4F is an example user interface 400F for training on the infant care device 10, according to some embodiments of the present disclosure. The example user interface 400F is similar to the example user interface 400E. Additionally, the example user interface 400E may represent the training manager's response to the selections indicated in the training dialog 406D of the user interface 400D. More specifically, the user interface 400E may represent the training manager's response to the selection of the "8 Hr" timespan 412F, "Baby Temp 1," "Air Temp," and "Set Temp" sensor selections 414F.

Further, the example user interface 400F includes a graph 416 of the selected temperatures over the 8-hour timespan 418, and a legend 420 indicating the representative lines of the graph 416. In these ways, some embodiments of the present disclosure may provide simulated clinical scenario user interfaces 400A, 400B, 400C, 400D, 400E, 400F that may be useful to train a clinician or other operator how to use the infant care device 10 in a clinical scenario of falling patient temperature. Further, using the graph 416, the clinician or other operator may evaluate the trends by comparing the decline in baby temperature with trends over the same time span in air temperature and set temperature. With such an evaluation, the clinician or other operator may be able to determine their next course of action in patient care. Accordingly, by providing this simulated clinical scenario, some embodiments of the present disclosure may improve the ability of the clinician or other operator to use the infant care device 10 in a future clinical scenario of falling patient temperature, thus improving patient care and patient outcomes. The scenario of falling patient temperature while stationed in an infant warmer is merely one example of a simulated clinical scenario. Some embodiments of the present disclosure may provide other clinical scenarios, which may include, but are not limited to, admitting the patient to a bed for the first time; customizing environmental controls for infants of different gestational ages and weights; preparing the bed and patient for an X-ray. Additionally, according to some embodiments of the present disclosure, clinical scenarios can provide guidance, such as explaining how the temperature control algorithm works. Such embodiments may describe the effects of changing the temperature setting for the device, such as how quickly the change takes effect. Other guidance may include describing the implications of raising the canopy, including under which circumstances raising the canopy may have negative consequences for the patient.

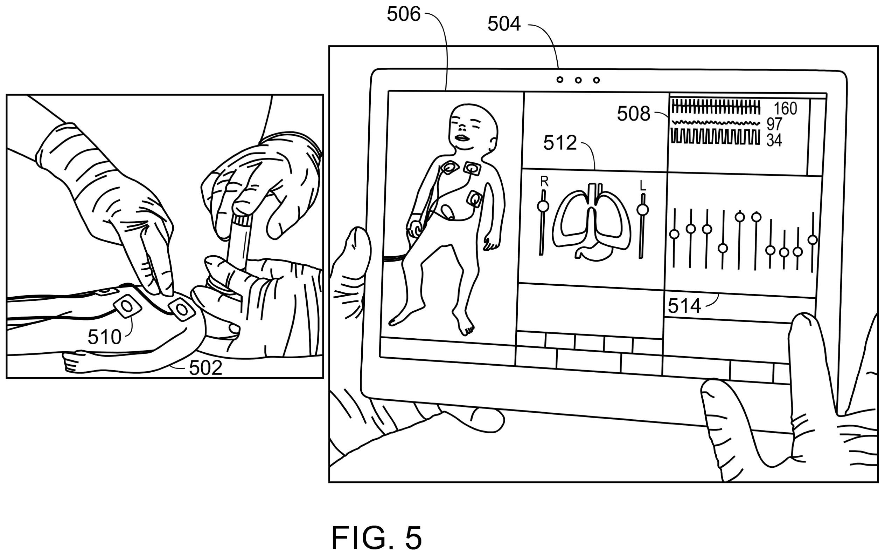

Fig. 5 is an infant mannequin 502 and a simulator control device 504 for training, according to some embodiments of the present disclosure. A training manager may incorporate the infant mannequin 502 and simulator control device 504 to provide a simulated clinical scenario for training a healthcare provider in techniques such as, positioning, infant resuscitation, intubation, and the like. By incorporating the use of the infant mannequin 502 in the training, such embodiments may provide an immersive, lifelike training simulation.

The infant mannequin 502 may be electronically controlled to simulate movement, respiration, heart rate, and other physiological characteristics. More specifically, the infant mannequin 502 may include internal electro-mechanical elements that simulate the functions of internal organs such as, an infant's lungs, heart, stomach, and the like. The simulator control device 504 is an example device that is useful for controlling the physiological characteristics of the infant mannequin 502. Alternatively, the simulator control device 504 may include mechanical controls for the infant mannequin 502.

Accordingly, the electronically controlled infant mannequin 502 may respond to selections on the simulator control device 504 by generating the specified physiological characteristics. In this example, the infant mannequin 504 has electrodes 506 attached, which may also be connected to the infant control device of the bed (e.g., the infant warmer and resuscitation device). Accordingly, the electrodes 506 may sense the simulated behavior of the infant mannequin 502, and provide simulated physiological signals to the bed.

To control the simulated behavior of the infant mannequin 502, the simulator control device 504 includes a user interface 508. The user interface 508 includes lung controls 510, physiological controls 512, and vital statistics 514. The lung controls 510 may control the left and right lung function, where the slide represents a range of function from none (at the bottom setting) to full (at the top setting). Hence, to simulate a collapsed left lung, a clinician or other operator may slide the left lung control to the bottom setting. Accordingly, the electronically controlled infant mannequin 502 may respond to the lung control settings by simulating the specified level of function. For example, a fully functional lung may fully inhale and exhale; conversely, a collapsed lung may not inhale or exhale.

The physiological controls 512 may set parameters for physiologies such as heart rate, respiration rate, muscle tone, heart rate variability, oxygen saturation rate, and the like. As such, each of the slides may represent a control for each of the simulated physiologies. Further, the vital statistics 514 may indicate the settings of the physiological controls 512. For example, a heart rate shown in the vital statistics 514 may increase or decrease with respect to the setting of the slide for the heart rate physiological control.

In these ways, it is possible to provide an immersive, lifelike training simulation for a specific clinical scenario. Accordingly, trainees may administer care to the infant mannequin both manually, i.e., chest compressions, and using, for example, an infant warmer and resuscitation device. Additionally, the training manager may add complexities to the simulated scenario in response to the care administered. For example, in response to a simulation where the SpO₂ of the infant mannequin 502 is falling, the trainees may provide an increased FiO₂ from the resuscitation device. However, instead of increasing the SpO₂ reading for the infant mannequin 502, the training manager may provide further readings showing the SpO₂ continuing to fall.

Additionally, the electrodes 506 attached to the infant mannequin 502 may be connected with the simulator control device 504. As such, the electrodes 506 may provide the sensed physiological characteristics to the simulator control device 504. Accordingly, the simulator control device 504 may update the vital statistics 514 and lung function controls 510 based on the data provided by the electrodes 506.

According to some embodiments of the present disclosure, the simulator control device 504 may control various aspects of the bed. Controlling aspects of the bed may refer to controlling features of a medical device that provides care to the infant mannequin 502 on the bed. For example, an infant warmer and resuscitation device may include bed controls for settings like radiant heater power, peak inspiratory pressure (PIP), peak end expiratory pressure (PEEP), flow rate, and fraction of inspired oxygen (FiO₂). Accordingly, the simulator control device may be configured to control these features.

Further, according to some embodiments of the present disclosure, the infant mannequin 502 may be a simple prop without internal electro-mechanical elements or electronic controls. Accordingly, instead of electrodes 506 attached to the infant mannequin 502 providing physiological data to the bed, the simulator control device 504 may provide the physiological data to the bed for the simulation.

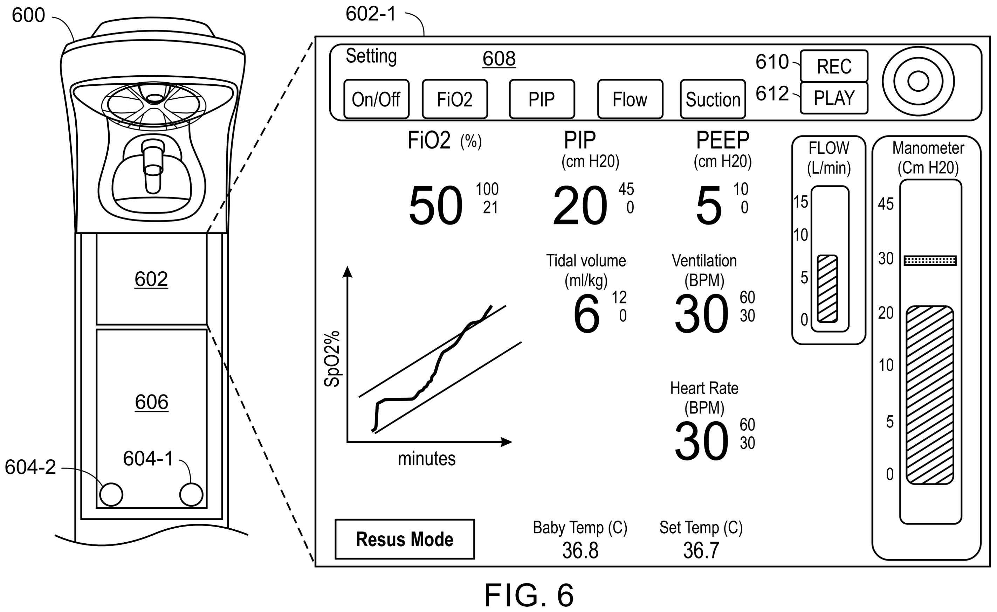

Fig. 6 is an infant care device 600 and an example user interface 602-1 for training on the infant care device 600, according to some embodiments of the present disclosure. In this example, the infant care device 600 may be an infant warmer and ventilator device. The infant care device 600 may include a user interface display 602, a primary oxygen flow port 604-1, a secondary oxygen flow port 604-2 (also referred to herein as a bag and mask/T-piece outlet), and a bed 606. The infant (not shown) may rest on the bed 606, with the bag and mask covering their mouth and nose, through which oxygen flows from one of the oxygen flow ports. Additionally, the infant may have sensor electrodes attached to their body, which may provide vital measurements to a controller (not shown) of the infant care device 600. The user interface display 602 may present a user interface 602-1, which may include controls 608 for operating the infant care device, physiological measurements of the infant, and information about the operation of the infant care device 600. The controls 608 may change settings on the bed. For example, the "Flow" may regulate the flow of air through the ventilation system, e.g., 1 Liter per minute (L/min), 2 L/min, and the like. The "Suction" control may be an on/off toggle or, alternatively, have a variable rate that the clinician or other operator may set.

The physiological measurements may include the patient's temperature, heart rate, and specific percentage of oxygen saturation (SpO2%). The information about the operation of the infant care device 600 may include the fraction of inspired oxygen (FiO2), peak inspiratory pressure (PIP) in centimeters of water (cm H2O), positive end expiratory pressure (PEEP), tidal volume, and ventilation in breaths per minute (BPM). Additionally, the user interface 602-1 includes scales representing the flow of oxygen in liters per minute (L/min), and a manometer represented in cm H2O. According to some embodiments of the present disclosure, the controller of the infant care device 600 may record a clinical scenario in response to a selection by a clinician or other operator of the infant care device 600. More specifically, in response to a selection of the record (REC) button 610, the training manager may begin a screen recording of the user interface 602-1. Hence, for training purposes, the training manager may later playback the recorded clinical scenario on the user interface display 602. The playback may show the sequence of changes to the user interface 602-1 during the course of the recording. Further, the training manager may provide such playback in real-time or at specific rates of playback in the forward and reverse directions. Additionally, in some cases, the infant care device 600 may include an image sensor, or camera recording device. Thus, during a recording, the training manager may also initiate a video recording of the clinicians providing care to the infant. Hence, during a playback session, the training manager may concurrently playback the video with the user interface playback. In some embodiments, the training manager may provide the video playback as an inset image on the user interface display 602. Alternatively, the training manager may provide the video for playback on a mobile or other display device. Such playbacks may be useful for training clinicians or other operators on the use of the infant care device 600 in real-life clinical scenarios.

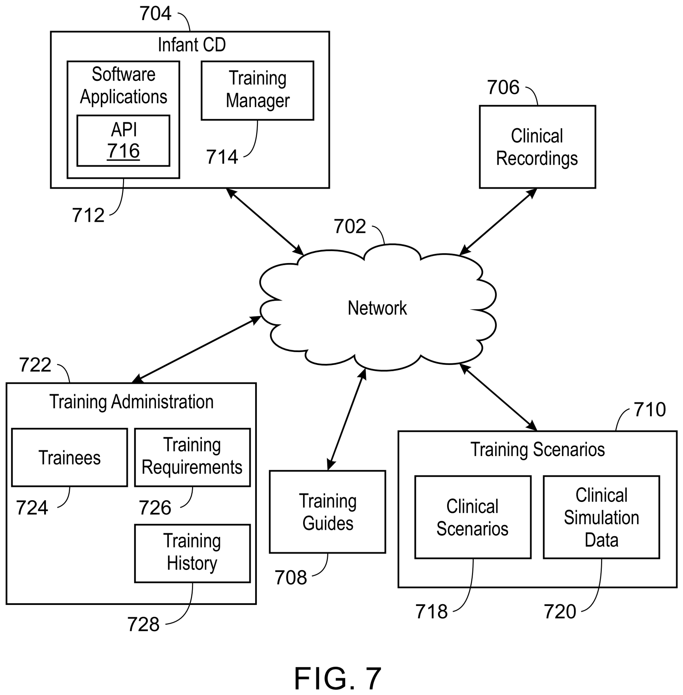

Fig. 7 is a diagram of a system for training on infant care devices, according to some embodiments of the present disclosure. The system 700 may include a network 702, infant care devices (CD) 704, clinical recordings 706, training guides 708, training scenarios 710, and training administration 722. The network 702 may be a computer communication network or collection of networks, such as a local area network, wide area network, and the like. In some embodiments of the present disclosure, the network 702 is the Internet. Accordingly, the infant care devices 704, clinical recordings 706, training guides 708, training scenarios 710, and elements therein, may communicate with each other over the network 702. The clinical recordings 706, training guides, and training scenarios 710 may be stored on one or more servers accessible to and from the network.

The infant care device 704 may be similar to the infant care devices 10, described with respect to Figs. 1, 2, 3A-3E, 4A-4F, 5, and 6. Further, the infant care devices 704 may include a controller (not shown), which may be similar to the controller 70 described with respect to Figs. 1 and 2, and a training manager, described with respect to Figs. 1, 2, 3A-3E, 4A-4F, 5, and 6. Further, the infant care device 704 may include software applications 712 and a training manager 714. The software applications 712 may be similar to the software applications that perform the functionality and provide the user interfaces described with respect to Figs. 1, 2, 3A-3E, 4A-4F, 5, and 6. The training manager 714 may be similar to the training manager described with respect to Figs. 1, 2, 3A-3E, 4A-4F, 5, and 6. More specifically, the training manager 714 may provide guided training, record clinical sessions, play back clinical session recordings, and simulate training scenarios, as described herein.

The clinical recordings 706 may be screen recordings of clinical sessions and video recordings, as described with respect to Fig. 6. According to some embodiments of the present disclosure, the training manager 714 may generate the clinical recordings 706 by performing screen recordings of user interfaces during a clinical session. Additionally, the training manager 714 may store video recordings of clinical sessions in the clinical recordings 706. Further, in response to a request to play back a clinical recording 706, the training manager 714 may retrieve the corresponding clinical and video recordings for the requested clinical session.

The training guides 708 may be software configured to perform guided training as described with respect to Figs. 3A-3E. In response to a request for guided training, the training manager 714 may select and execute a specific training guide 708 based on the software application 712 that is currently executing, and the current user interface being displayed. Further, the training guides 708 may display training dialogs, menus, instructions, guide arrows, and other indicators to guide a clinician or other operator in the use of specific functions of a software application 712.

The training scenarios 710 may be a server or other computing device hosting clinical scenarios 718 and clinical simulation data 720. The clinical scenarios 718 may be software configured to simulate clinical sessions, as described with respect to Figs. 4A-4F and 5. The clinical simulation data 720 may be physiological, device operation, and other data that is relevant to an infant care device simulation. According to some embodiments of the present disclosure, the training manager 714 may select a clinical scenario 718 for simulation based on the software application 712 that is currently executing. As stated previously, the training manager 714 may select clinical scenarios 718 for a software application 712 randomly, or based on a user selection. The clinical scenario 718 may interface with the software application 712 using the API 716. More specifically, the clinical scenario 718 may use the API 716 to provide the clinical simulation data 720 to the software application 712. Accordingly, the infant care device 704 that is executing the software application 712 may display the clinical simulation data 720 on one or more of its user interfaces.

The training administration 722 may be a datastore that includes trainees 724, training requirements 726, and training history 728. The trainees 724 may include the clinical staff, nurses, and the like that are responsible for operating the infant care devices 704. The training requirements 726 may include the training modules, e.g., training guides 708, that the trainees 724 are required to complete as part of their job responsibilities, qualifications, and/or certifications for operating the infant care devices 704. The training requirements 726 may include initial training requirements and refresher requirements. The refresher requirements may be useful to keep clinical staff proficient in the use of infant care devices 704 by periodically repeating training and/or completing updated training when an infant care device 704 is updated with new functionality. The training history 728 may include the dates that the trainees 724 complete training requirements 726 for the infant care devices 704. Accordingly, the training manager 714 may generate a training history 728 record whenever a trainee 724 completes a training requirement 726.

Hence, a nursing manager, clinical manager, or education manager may use the training manager 714 to identify which trainees 724 have and have not completed their training. According to some embodiments of the present disclosure, the training manager 714 may provide user interfaces to populate the training administration with data to populate the datastores of trainees 724 and training requirements 726. Additionally, the training manager 714 may use the training administration 722 to generate reminders for trainees 724 to complete specific training modules for an infant care device 704. In such embodiments, the training manager 714 executing for an infant warmer, for example, may use a login function to identify the operator of the infant warmer. Additionally, the training manager 714 may search the training requirements 726 to identify the required training for the infant warmer. Thus, for each training requirement 726, the training manager 714 may search the training history 728 to determine if the trainee 724 has completed the training requirements 726 for the infant warner. If not, the training manager 714 may generate a training dialog on the infant warmer display to remind the trainee 724 to complete specific training requirements 726. Alternatively, in some embodiments of the present disclosure, the training manager 714 may interface with a separate learning management system to document completed training and training requirements.

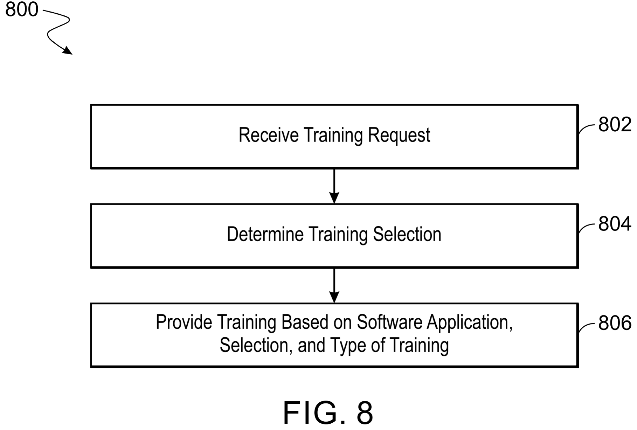

Fig. 8 is a process flow chart of a method 800 for training on infant care devices 10, according to some embodiments of the present disclosure. The training manager 714 may perform the method 800.

At operation 802, the training manager 714 may receive a training request. The training request may include a generic request for training on a specific user interface of a software application. Alternatively, the training request may be a selection from the training menu provided by the training manager. According to some embodiments of the present disclosure, the training request may be a request for guided training, clinical simulation, clinical session recording, and/or clinical recording playback.

At operation 804, the training manager 714 may determine the training selection. According to some embodiments of the present disclosure, the training manager 714 may determine the training selection based on the software application and the user interface currently provided by the software application. Further, the training manager 714 may determine whether the training selection is a request for a training menu, a guided training selection, clinical recording, clinical playback, or a clinical simulation.

At operation 806, the training manager 714 may provide the training based on the software application, the training selection, and the type of training. Accordingly, if the training selection is guided training, the training manager 714 may select the training guide 708 based on the current software application and user interface. Further, if the training selection is for clinical session recording, the training manager 714 may begin a screen recording and video recording, and store the clinical recordings 706 at the conclusion of the recording. Conversely, if the training selection is a clinical recording playback, the training manager 714 may retrieve the requested clinical recording 706, and play the clinical recording on a display of the infant care device 10 and potentially a second device for the video recording. Additionally, if the training selection is for a simulated clinical scenario, the training manager 714 may select and execute a clinical scenario 718 as described herein.

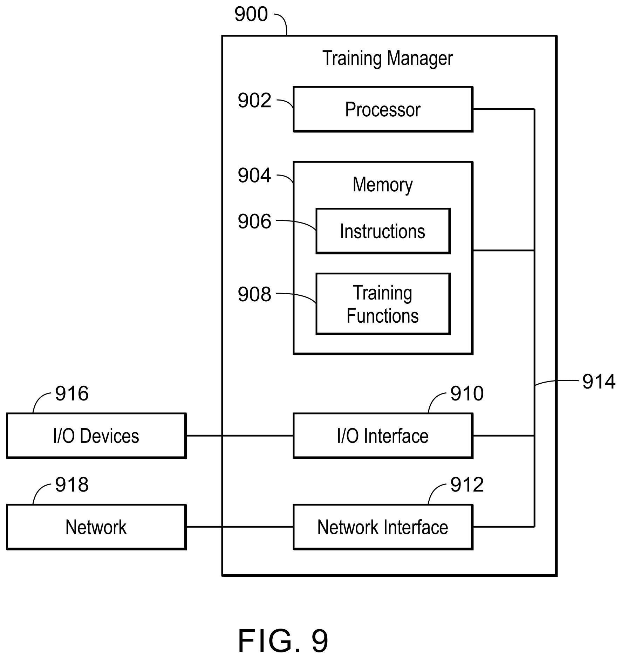

Fig. 9 is a diagram of an example training manager 900 for infant care devices, according to some embodiments of the present disclosure. The example training manager 900 for infant care devices may provide training on infant care devices, as described with respect to Figs. 1, 2, 3A-3E, 4A-4F, and 5-8. In this example, the training manager 900 for infant care devices includes a processor 902, memory 904, input-output (I/O) interface 910, and network interface 912, which may be connected by an interconnect 914. The processor 902 may be a computer processing circuit (e.g., a central processing unit (CPU)) that retrieves and executes programming instructions 906 stored in the memory 904 to perform the functionality described herein. The interconnect 914 may move data, such as programming instructions, between the processor 902, memory 904, I/O interface 910, and network interface 912. The interconnect 914 may include one or more buses.

The memory 904 may be a computer memory or storage device, including volatile memory, such as a random access memory (RAM) device (e.g., static RAM, dynamic RAM, and the like), non-volatile memory, such as a hard disk drive, solid state device (SSD), removable memory cards, optical storage, flash memory devices, and the like. In some examples, the memory 904 may include volatile and non-volatile memory devices. Further, the memory 904 may store instructions 906 and training functions 908. The instructions 906 may perform the techniques of the training manager 714 as described with respect to Figs. 1, 2, 3A-3E, 4A-4F, and 5-8. The training functions 908 may include the clinical recordings 706, training guides 708, and training scenarios 710, described with respect to Fig. 7.

Additionally, the training manager 900 for infant care devices may be in electronic communication with I/O devices 916 through the I/O interface 910, and with a network 918 through the network interface 912. The I/O devices 916 may capture inputs and provide outputs as described herein. The network 918 may be an electronic communication network, such as a local area network, wide area network, and the like, for processing communications between the training manager 900 for infant care devices, training guides 706, clinical recording 708, and clinical scenarios 710. In some examples, the network 918 may be wired, wireless (e.g., wi-fi, Bluetooth, or cellular), or some other computer communication network.

In some embodiments, the training manager 900 for infant care devices may be a server computer or similar device without an example user interface but which receives requests from other computer systems having one or more user interfaces. Further, in some embodiments, the training manager 900 for infant care devices may be a portable computer, laptop, tablet computer, pocket computer, telephone, smart phone, or the like.

An example system for training on infant care devices includes a processor and a memory. The memory includes instructions executable by the processor to receive a request for training on an infant care device, determine a training selection based on the request, and provide a training based on the training selection, a software application running on the infant care device, and a current user interface being provided by the software application.

In some examples, the instructions are executable by the processor to provide a training guide for a selected function of the software application.

In some examples, the instructions are executable by the processor to provide a clinical simulation for the software application.

In some examples, the system includes an infant mannequin configured to provide simulated physiological data corresponding to the clinical simulation.

In some examples, the instructions are executable by the processor to perform a screen recording of the user interfaces that are provided by the software application.

In some examples, the instructions are executable by the processor to perform a playback of the screen recording.

In some examples, the instructions are executable by the processor to perform a video recording of a clinical setting comprising the infant care device.

In some examples, the instructions are executable by the processor to perform a playback of the video recording.

In some examples, in response to a trainee completing the training, the instructions are executable by the processor to generate a training history for the trainee based on the training and the infant care device.

In some examples, the instructions are executable by the processor to identify a training requirement for the trainee to complete a training module associated with the infant care device.

An example method for training on infant care devices includes receiving a request for training on an infant care device. Additionally, the method includes determining a training selection based on the request. Further, the method includes providing a training based on the training selection, a software application running on the infant care device, and a current user interface being provided by the software application.

In some examples, the method includes providing a training guide for a selected function of the software application.

In some examples, the method includes providing a clinical simulation for the software application.

In some examples, the clinical simulation is associated with an infant mannequin configured to provide simulated physiological data corresponding to the clinical simulation.

In some examples, the method includes performing a screen recording of the user interfaces that are provided by the software application.

In some examples, the method includes performing a playback of the screen recording.

In some examples, the method includes performing a video recording of a clinical setting comprising the infant care device.

In some examples, the method includes performing a playback of the video recording.

An example computer-readable medium includes instructions executable by a processor to receive a request for training on an infant care device, determine a training selection based on the request, and provide a training based on the training selection, a software application running on the infant care device, and a current user interface being provided by the software application.

In some examples, the instructions are executable by the processor to provide a training guide for a selected function of the software application and provide a clinical simulation for the software application.

As used herein, the term, mechanism, can encompass hardware, software, firmware, or any suitable combination thereof. In some embodiments, any suitable computer readable media can be used for storing instructions for performing functions and/or processes described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as RAM, Flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, or any suitable media that is fleeting and devoid of any semblance of permanence during transmission, and/or any suitable intangible media.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system for training on infant care devices, comprising:
a processor; and
a memory comprising instructions executable by the processor to:
receive a request for training on an infant care device;
determine a training selection based on the request; and
provide a training based on the training selection, a software application running on the infant care device, and a current user interface being provided by the software application.

2. The system of claim 1, wherein the instructions are executable by the processor to provide a training guide for a selected function of the software application.

3. The system of claim 1, wherein the instructions are executable by the processor to provide a clinical simulation for the software application.

4. The system of claim 3, comprising an infant mannequin configured to provide simulated physiological data corresponding to the clinical simulation.

5. The system of claim 1, wherein the instructions are executable by the processor to perform a screen recording of a plurality of user interfaces that are provided by the software application.

6. The system of claim 5, wherein the instructions are executable by the processor to perform a playback of the screen recording.

7. The system of claim 5, wherein the instructions are executable by the processor to perform a video recording of a clinical setting comprising the infant care device.

8. The system of claim 7, wherein the instructions are executable by the processor to perform a playback of the video recording.

9. The system of claim 1, wherein, in response to a trainee completing the training, the instructions are executable by the processor to generate a training history for the trainee based on the training and the infant care device.

10. The system of claim 9, wherein the instructions are executable by the processor to identify a training requirement for the trainee to complete a training module associated with the infant care device.

11. A method, comprising:
receiving a request for training on an infant care device;
determining a training selection based on the request; and
providing a training based on the training selection, a software application running on the infant care device, and a current user interface being provided by the software application.

12. The method of claim 11, comprising providing a training guide for a selected function of the software application.

13. The method of claim 11, comprising providing a clinical simulation for the software application.

14. The method of claim 13, wherein the clinical simulation is associated with an infant mannequin configured to provide simulated physiological data corresponding to the clinical simulation.

15. The method of claim 11, comprising performing a screen recording of a plurality of user interfaces that are provided by the software application, and/or comprising performing a video recording of a clinical setting comprising the infant care device, and/or comprising performing a playback of the video recording.
